# DEMANDE DE BREVET EUROPEEN

(11) **EP 2 740 993 A1**
(43) Date de publication de la demande: **11.06.2014**
(21) Numéro de dépôt: 13195916.5
(22) Date de dépôt: 05.12.2013
(51) Int. Cl.: F21S 8/10, F21V 29/00, B60Q 1/20, F21Y 101/02

(54) **Dispositif d'émission de lumière pour projecteur de véhicule automobile et projecteur équipé dudit dispositif**

(30) Priorité: 07.12.2012 FR 1261779
(71) Demandeur: VALEO ILUMINACION,, 23600 Martos (ES)
(72) Inventeur: Puente, Jean-Claude, 93190 LIVRY GARGAN (FR); Moisy, Eric, 23009 JAEN (ES); Gomez, Carlos, 23600 Martos (ES); Herrera, Jose-Manuel, 23600 MARTOS (ES)

(57) **Abrégé**

L'invention concerne un dispositif (1) d'émission de lumière pour projecteur de véhicule automobile, ledit dispositif (1) comprenant un boitier (6), une source lumineuse (4) disposée sur ledit boitier (6) et un dispositif optique dirigeant un ou des faisceaux lumineux émis par ladite source (4), ledit boitier (6) comprenant un élément configuré en saillie pour autoriser un positionnement fixe dudit élément optique par rapport audit boîtier (6). Ce dispositif (1) est remarquable en ce que ledit élément configuré en saillie comprend au moins une nervure creuse (18) formée à l'intérieur d'un logement (8) défini par ledit boitier (6) et ledit dispositif optique comprend, en vis-à-vis du boitier (6), une rainure (32) s'emboitant au moins partiellement dans ladite nervure creuse (18) dudit boîtier (6).

L'invention concerne également un projecteur (2), notamment pour véhicule automobile comprenant ledit dispositif (1) d'émission.

## Description

La présente invention concerne un dispositif d'émission de lumière pour projecteur de véhicule automobile, ainsi qu'un projecteur équipé dudit dispositif. Bien que plus particulièrement prévue pour une utilisation dans des projecteurs additionnels tels que des feux antibrouillard, l'invention pourra aussi être utilisée dans des feux de route, feux de croisement ou tout autre type de projecteur de véhicule servant à éclairer la chaussée.

Par projecteurs additionnels, on entend des projecteurs destinés à être ajoutés à un véhicule après sa fabrication, pour le personnaliser, à l'opposé des projecteurs, dits à demeure, présents sur le véhicule en sortie de chaîne. Les premiers sont le plus souvent optionnels, alors que les seconds sont le plus souvent obligatoires en raison des réglementations en vigueur.

Dans ce domaine, il est connu des dispositifs d'émission comprenant un boitier accueillant une source lumineuse et un dispositif optique dirigeant un faisceau lumineux émis par ladite source.

Un bon positionnement de la source par rapport au dispositif optique est nécessaire pour assurer un guidage correct du faisceau émis par le dispositif optique, en particulier lorsque la source comprend des diodes électroluminescentes.

Différentes solutions de positionnement ont déjà été proposées.

Dans les projecteurs additionnels, il est en particulier connu de positionner le projecteur par rapport à son environnement lors de sa fixation au véhicule. Cette solution ne permet cependant pas toujours une précision de positionnement satisfaisante.

Dans les projecteurs à demeure, il est connu de positionner le dispositif optique tout en lui laissant un ou plusieurs degrés de liberté permettant un réglage de la hauteur du faisceau émis. De telles solutions sont cependant relativement complexes.

L'invention a pour but de pallier les inconvénients précités et propose en ce sens un dispositif d'émission de lumière pour projecteur de véhicule automobile, ledit dispositif d'émission de lumière comprenant un boitier, une source lumineuse disposée sur ledit boitier et un dispositif optique dirigeant un ou des faisceaux lumineux émis par ladite source lumineuse.

Selon l'invention, ledit boitier comprend un élément configuré en saillie pour autoriser un positionnement fixe dudit dispositif optique par rapport au boîtier. Par positionnement « fixe », on entend un positionnement immobilisant ledit dispositif optique dans toutes les directions de l'espace.

En faisant supporter ladite source lumineuse par le boîtier et en positionnant le dispositif optique par rapport au boîtier, on obtient une meilleure indexation dudit dispositif optique par rapport à la source lumineuse, ceci sans utilisation de pièces supplémentaires. Une fixation définitive du dispositif optique audit boîtier pourra être obtenue par tous moyens, éventuellement complémentaires, adéquats.

Selon différentes caractéristiques de l'invention qui pourront être prise ensemble ou séparément :
- l'élément configuré en saillie comprend au moins une nervure creuse formée à l'intérieur d'un logement défini par ledit boitier,
- ladite nervure creuse du boîtier est rectiligne et/ou comprend plusieurs branches,
- ledit dispositif optique comprend, en vis-à-vis du boitier, une rainure s'emboitant au moins partiellement dans ladite nervure creuse du boîtier,
- ladite rainure forme une nervure creuse sur une face du dispositif optique opposée au boitier,
- ladite source lumineuse émet un ou des faisceaux lumineux centrés sur un axe transversal à un axe optique du dispositif d'émission de lumière,
- ladite source lumineuse comprend une ou des diodes électroluminescentes,
- la ou lesdites diodes électroluminescentes sont fixées sur un circuit imprimé,
- la ou lesdites diodes sont disposées au niveau de la nervure creuse du boitier, notamment au niveau de parois latérales de ladite nervure creuse du boîtier,
- la nervure creuse du boîtier supporte les LEDs, notamment via ledit circuit imprimé,
- la nervure creuse du dispositif optique comprend une ou des ouvertures pour laisser passer la lumière émise par la ou lesdites diodes,
- ledit dispositif optique est un réflecteur,
- ledit réflecteur permet de réfléchir tout ou partie du faisceau émis par ladite source lumineuse de façon à former le faisceau émis par ledit dispositif d'émission de lumière,
- ledit réflecteur est positionné sur la nervure creuse du boitier de façon à ce que la ou lesdites diodes soient situées au niveau d'un ou de foyers dudit réflecteur,
- ledit réflecteur comprend plusieurs cavités de réflexions, notamment chaque cavité coopérant chacune avec une source lumineuse distincte ; selon une réalisation optionnelle la nervure creuse du réflecteur sépare ces différentes cavités,
- de préférence, mais de manière non limitative, la nervure creuse du réflecteur, les cavités et les sources lumineuses sont agencées de manière à ce que les rayons lumineux émis par une desdites sources lumineuses donnée n'atteignent que la cavité du réflecteur qui lui est associée,
- le réflecteur, et la ou les nervure(s) creuse(s) dudit réflecteur séparant ces cavités sont venus de matière en une seule pièce,
- le boîtier définit un logement pour ladite source lumineuse,
- ladite source lumineuse est en contact thermique avec le boîtier et ledit boîtier est configuré pour permettre une dissipation thermique de la chaleur dégagée par ladite source lumineuse,
- ladite nervure creuse du boîtier est configurée pour augmenter la surface d'échange,
- ladite nervure creuse du boîtier est orientée vers l'intérieur et/ou l'extérieur du boîtier,
- ladite nervure creuse du boîtier comprend deux flancs raccordés par un fond,
- ladite nervure creuse du boîtier, vue de l'extérieur du boîtier, forme une gorge,
- ladite nervure creuse du boîtier est issue de matière dudit boîtier,
- ladite nervure creuse du boîtier est garnie d'ailettes de dissipation thermique,
- lesdites ailettes sont situées dans ladite gorge,
- lesdites ailettes se situent à l'extérieur du logement défini par ledit boîtier,
- lesdites ailettes se situent dans un encombrement dudit boîtier, c'est-à-dire qu'elles ne sont pas en proéminence de la surface externe du boitier,
- ladite ou lesdites nervure(s) creuse(s) présente(nt) un axe d'extension longitudinale,
- lesdites ailettes sont transversales à ladite direction d'extension de la nervure creuse du boîtier,
- lesdites ailettes s'étendent depuis le fond de ladite nervure creuse du boîtier jusqu'à des bords de ses flancs, opposés audit fond, et/ou d'un desdits flancs à l'autre,
- lesdites ailettes sont au moins prévues au voisinage d'une partie de la nervure creuse du boîtier portant la source lumineuse,
- lesdites ailettes sont régulièrement réparties le long de ladite nervure creuse du boîtier,
- le boîtier comprend des brides de fixation à un support,
- lesdites brides sont situées de part et d'autre de la nervure creuse du boîtier, à l'une de ses extrémités.

Selon cette dernière caractéristique, on peut régler la hauteur du faisceau émis sans toutefois faire appel à des mécanismes de réglage modifiant l'orientation du dispositif optique par rapport au boîtier.

L'invention concerne encore un projecteur de véhicule automobile comprenant le dispositif d'émission tel que décrit plus haut.

D'autres caractéristiques et avantages de l'invention apparaîtront à la lecture de la description détaillée qui suit pour la compréhension de laquelle on se reportera aux dessins annexés parmi lesquels :
- la figure 1 est une vue en perspective éclatée d'un exemple de réalisation du dispositif d'émission et du projecteur selon l'invention ;
- la figure 2 illustre de façon schématique, selon un plan de coupe radiale, le dispositif d'émission et le projecteur de la figure 1 ;
- la figure 3 est une vue en perspective, par l'arrière, du dispositif d'émission et du projecteur de la figure 1 ;
- la figure 4 illustre en perspective, de façon éclatée, une première variante de réalisation du boîtier et du dispositif optique du dispositif conforme à l'invention ;
- la figure 5 illustre en perspective une autre variante de réalisation du dispositif optique conforme à l'invention.

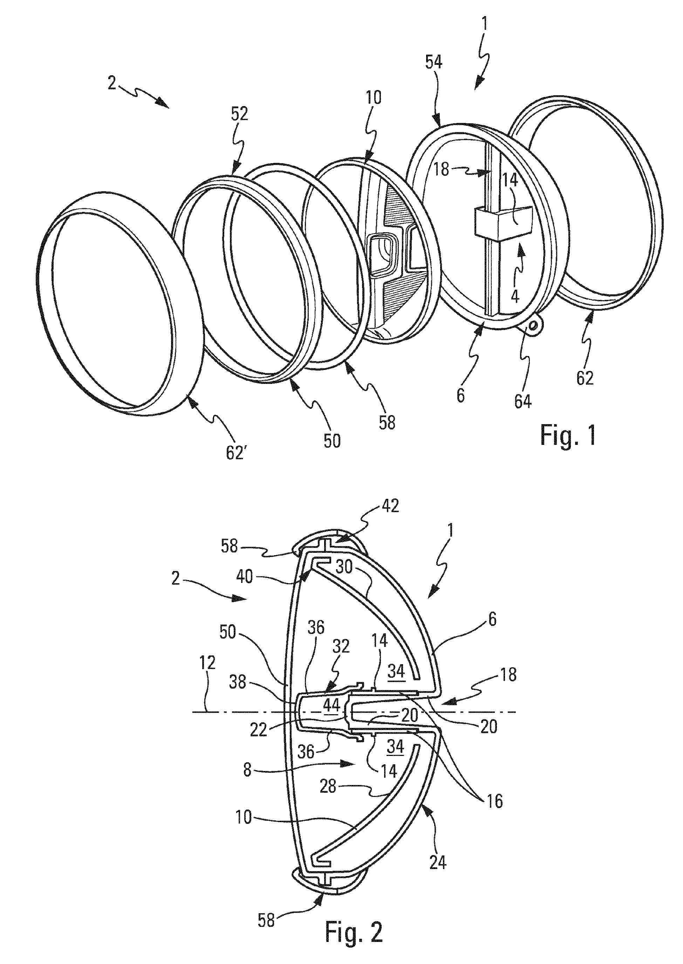

Comme illustré aux figures 1 à 3, l'invention concerne tout d'abord un dispositif 1 d'émission de lumière pour projecteur 2 de véhicule automobile.

Ledit dispositif 1 d'émission de lumière comprend un boitier 6 et une source lumineuse 4 disposée sur ledit boitier 6 qui définit ici un logement 8 pour ladite source lumineuse 4.

Ledit dispositif 1 comprend en outre un dispositif optique dirigeant un ou des faisceaux lumineux émis par ladite source lumineuse 4. Ledit dispositif optique est en particulier configuré pour concentrer le ou les faisceaux lumineux émis par ladite source lumineuse 4. On forme de la sorte le faisceau émis par ledit dispositif 1 d'émission de lumière qui pourra en particulier se trouver à l'intérieur d'un cône d'émission centré sur un axe optique 12 dudit dispositif 1 d'émission de lumière.

Ledit dispositif optique est, par exemple, un réflecteur 10 permettant de réfléchir le ou les faisceaux émis par ladite source lumineuse 4. Il pourra bien sûr comprendre, de façon alternative ou combinée, tout autre élément optique, tels que des lentilles, permettant de diriger en l'intensifiant le ou les faisceaux émis par ladite source lumineuse 4.

Ladite source lumineuse 4 comprend au moins une diode électroluminescente 14. La ou lesdites diodes 14 sont placées, par exemple, sur un support 16 tel que, notamment, un substrat métallique isolé, permettant l'alimentation électrique desdites diodes 14. Lesdits supports 16 pourront également intégrer des composants électroniques, non-visibles, participant à la commande desdites diodes 14.

Selon l'invention, le boitier 6 comprend un élément configuré en saillie pour autoriser un positionnement fixe dudit élément optique par rapport audit boîtier 6. On dispose de la sorte d'une solution particulièrement simple favorisant un placement correct du dispositif optique par rapport à la source lumineuse 4.

Ledit élément configuré en saillie comprend au moins une nervure creuse 18, formée à l'intérieur du logement 8 défini par ledit boitier 6. Ladite nervure creuse 18 du boîtier 6 est avantageusement configurée pour immobiliser ledit réflecteur optique dans toutes les directions de l'espace.

Selon un mode de réalisation préférentielle, la ou lesdites diodes 14 sont disposées, en particulier fixées, au niveau de ladite nervure creuse 18 du boitier 6, notamment au niveau de flancs 20 de ladite nervure creuse 18, en particulier de part et d'autre de ladite nervure creuse 18.

Ladite source 4 émet ici un ou des faisceaux lumineux centrés sur un axe transversal, notamment orthogonal, à l'axe optique 12 du dispositif 1 d'émission de lumière selon l'invention et le dispositif optique redresse le ou les faisceaux émis pour les diriger selon ledit axe optique 12.

Lesdits flancs 20 de la nervure creuse 18 du boîtier 6 sont ici reliés par un fond 22. Ladite nervure creuse 18 du boîtier 6 présente une section en U, lesdits flancs 20 étant sensiblement parallèles.

Ladite nervure creuse 18 du boîtier 6 est avantageusement issue de matière dudit boîtier 6. Autrement dit, le boîtier 6 et la nervure creuse 18 du boîtier 6 forment une seule et même pièce.

Ledit boîtier 6 comprend, par exemple, un fond 24 présentant une forme de révolution, interrompue par ladite nervure creuse 18 du boîtier 6. La forme du fond 24 dudit boîtier 6 correspond, par exemple, à une calotte de sphère et/ou d'ellipsoïde de révolution.

Ledit dispositif optique et en particulier ledit réflecteur 10, pourra comprendre, en vis-à-vis du boitier 6, une rainure s'emboitant au moins partiellement dans ladite nervure creuse 18 du boîtier 6. Un tel emboitement facilite l'effet de positionnement recherché, notamment par centrage. Ladite rainure forme ici une nervure creuse 32 sur une face du réflecteur 10 opposée au boitier 6.

Ladite nervure creuse 32 du réflecteur 10 pourra coiffer la nervure creuse 18 du boîtier 6 et comprendre une ou des ouvertures 34 pour laisser passer la lumière émise par la ou lesdites diodes 14. Les ouvertures 34 de passage du faisceau émis par ladite source lumineuse 4 sont ici situées en vis-à-vis desdites diodes 14.

Ledit réflecteur 10 pourra présenter un ou plusieurs foyers et lesdites nervures creuses 18, 32 sont configurées pour que ladite source lumineuse 4, à savoir ici les diodes 14, se trouve sensiblement au niveau desdits foyers. Ledit réflecteur 10 pourra en particulier être configuré pour que les rayons lumineux émis par les diodes 14 soient réfléchis parallèlement les uns aux autres, dans la direction de l'axe optique 12.

Dans les modes de réalisation des figures 1 à 4, la nervure creuse 18 du boîtier 6 est située de part et d'autre d'un plan de symétrie passant par l'axe optique 12 dudit dispositif, orthogonal au plan de coupe à la figure 2.

Les flancs 20 de ladite nervure creuse 18 du boîtier 6 présentent ainsi des bords externes 23 sous forme d'arc de cercle et/ou d'ellipse. Lesdits flancs 20 se raccordent ici au fond 22 de ladite nervure creuse 18 du boîtier de façon rectiligne. Ce dernier est légèrement bombé vers l'intérieur du logement 8.

Le réflecteur 10 pourra, en correspondance, être symétrique par rapport au plan de symétrie évoqué plus haut. Sa nervure creuse 32 comprend, par exemple, deux flancs 36, dans lesquels sont respectivement ménagées lesdites ouvertures 34. Lesdits flancs 36 de ladite nervure creuse 32 du réflecteur 10 sont reliés, notamment, par un fond 38, ici légèrement convexe. Le réflecteur 10 comprend ici deux parties de fonds 28, 30 en forme de portions de paraboloïde de révolution reliés par ladite nervure creuse 32 dudit réflecteur 10.

Dans ces modes de réalisation, les nervures creuses 18, 32 sont, par exemple, rectiligne. En utilisation, les nervures creuses 18, 32 sont destinées à être orientée verticalement. En variante, elles pourront aussi être destinées à être utilisées horizontalement.

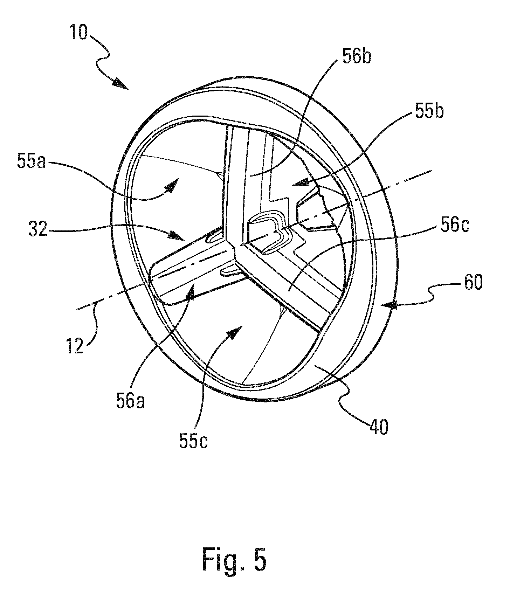

Comme illustré la figure 5, en variante, elles pourront encore comprendre plusieurs branches 56a, 56b, 56c. Elle est ici en forme d'étoile, en particulier à trois branches. Le fond du réflecteur 10 est alors divisé en trois zones 55a, 55b, 55c configurées pour réfléchir chacune les rayons émis par les diodes correspondantes, dans la direction de l'axe optique 12.

Un tel mode de réalisation permet de réaliser par lui-même un blocage dans toutes les directions de l'espace.

Dans les modes de réalisation des figures 1 à 4, la coopération des nervures creuses 18, 32 permettent d'obtenir un blocage selon au moins deux directions de l'espace.

Dans le mode de réalisation des figures 1 à 3, le blocage selon la troisième direction, à savoir la verticale selon les figures, pourra être obtenu par un effet de serrage.

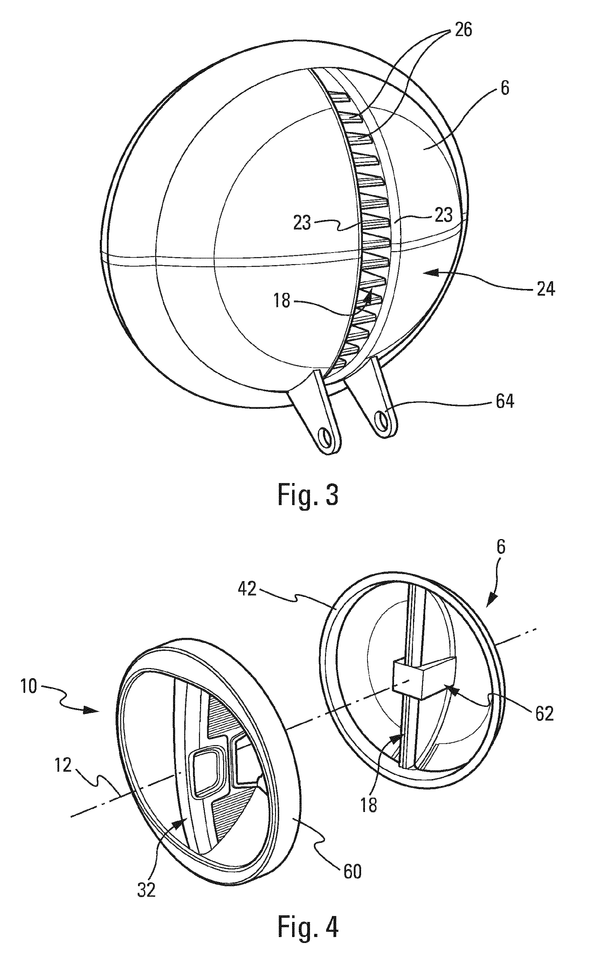

Dans le mode de réalisation de la figure 4, comme illustré par les différentes flèches, il pourra être obtenu par des surfaces respectives de butée 62, notamment situées sur ladite nervure creuse 18 du boîtier 6.

Cela étant, en référence à la figure 2, le réflecteur 10 présente ici un bord périphérique 40, en saillie par un rapport à un bord périphérique 42 du boîtier 6. Le fond 38 de ladite nervure creuse 32 du réflecteur 10 est en saillie par rapport au bord périphérique 40 du réflecteur 10. Le fond 22 de la nervure creuse 18 du boîtier 6 est en retrait par rapport au bord périphérique 42 du boîtier 6. Le dispositif 1 d'émission de lumière selon l'invention comprend une cavité 44 entre le fond 22 de la nervure creuse 18 du boîtier 6 et la nervure creuse 32 du réflecteur 10.

Comme plus particulièrement visible sur les figures 4 et 5, le réflecteur 10 pourra comprendre, par exemple, une jupe périphérique 60 le long de son bord périphérique 40, venant en vis-à-vis du bord périphérique 42 du boîtier 6.

On pourra noter que ledit réflecteur 10 comprend avantageusement plusieurs cavités de réflexions, à savoir ici, deux dans le mode de réalisation des figures 1 à 4 et trois dans le mode de réalisation de la figure 5, séparées par la nervure creuse 32 du réflecteur 10. Chaque cavité coopère respectivement avec une desdites diodes électroluminescentes 14.

La nervure creuse 32 du réflecteur 10, les cavités et les diodes électroluminescentes 14 pourront être agencées de manière à ce que les rayons lumineux émis par une desdites diodes électroluminescentes 14 donnée n'atteignent que la cavité du réflecteur 10 qui lui est respectivement associée.

Le réflecteur 10, et la ou les nervure(s) creuse(s) 32 dudit réflecteur 10 séparant ces cavités sont, par exemple, venus de matière en une seule pièce.

Selon un autre aspect de l'invention, la source lumineuse 4 est en contact thermique avec le boîtier 6, ce dernier étant configuré pour permettre une dissipation thermique de la chaleur dégagée par ladite source lumineuse 4.

Le boîtier 6 pourra pour cela être réalisé, par exemple, en matériau métallique, tel que de l'aluminium ou un alliage d'aluminium ou tout autre métal ou alliage métalliques présentant une bonne conductivité thermique. Comme développé dans la suite, il pourra aussi présenter une ou des formes favorisant la présence de surfaces d'échange thermique avec l'air ambiant.

On dispose de la sorte d'une solution dans laquelle la fonction de refroidissement de la source lumineuse 4 est assurée par le boîtier 6 lui-même, ce qui permet de diminuer le nombre de pièces et de donner au projecteur ainsi équipé un aspect esthétique avantageux.

A ce sujet, on comprend que la nervure creuse 18 du boîtier 6 et, en particulier, ses flancs 20 permettent une première augmentation de la surface d'échange thermique offerte par ledit boîtier 6.

Comme cela est mieux visible à la figure 3, ladite nervure creuse 18 du boîtier 6 pourra être garnie d'ailettes 26 de dissipation thermique, situées ici à l'extérieur dudit logement 8 défini par le boîtier 6.

Avantageusement, l'extension données auxdites ailettes 26 les limite dans l'encombrement donné par le fond 24 dudit boîtier 6 : les ailettes 26 ne dépassent pas au-delà de la surface externe du boitier 6. Ce niveau d'intégration contribue à donner au dispositif conforme à l'invention un aspect esthétique favorable.

Lesdites ailettes 26 sont ici transversales à ladite direction d'extension de la nervure creuse 18 du boîtier 6, ou de ses branches. Elles s'étendent, par exemple, depuis le fond 22 de ladite nervure creuse 18 du boîtier 6 jusqu'à ses bords 23 et/ou d'un flanc 20 de ladite nervure creuse 18 du boîtier 6 à l'autre.

En variante, elles pourraient être parallèles audit axe d'extension ou présenter tout autre orientation favorable à une circulation de l'air par convection naturelle.

Lesdites ailettes 26 sont au moins prévues au voisinage d'une partie de ladite nervure creuse 18 du boîtier 6 portant la source lumineuse 4, en particulier au niveau desdits supports 16. Lesdites ailettes 26 sont ici régulièrement réparties le long de ladite nervure creuse 18 du boîtier 6. Toute autre distribution est cependant possible.

Pour améliorer encore l'aspect esthétique du boîtier 6, celui-ci présentera avantageusement une surface extérieure lisse, c'est-à-dire sans formes ou autres ailettes destinées à augmenter la surface d'échange thermique, en dehors de la ou des nervure(s) creuse(s) du boîtier 6.

L'invention concerne également le projecteur 2 comprenant ledit dispositif d'émission 1.

En référence à la figure 1 , le projecteur 2 pourra en outre comprendre une glace de fermeture 50 et une éventuelle pièce de style, ou cache, située entre ladite glace de fermeture 50 et ledit réflecteur 10, selon l'axe optique 12 dudit dispositif d'émission.

Ladite glace 50 et/ou ledit boîtier 6 pourront comprendre chacun une lèvre 52, 54 d'appui l'un sur l'autre. Ils sont assujettis l'un à l'autre, par exemple, par un adhésif double face 58, ici placés entre lesdites lèvres 52, 54.

Ledit projecteur 2 comprend en outre, par exemple, un anneau d'habillage 58, en deux parties annulaires 62, 62', jointes axialement l'une à l'autre. Cet anneau 58 permet en particulier de dissimuler la liaison entre la glace 50 et le boîtier 6.

Le boîtier 6 pourra comprendre des brides 64 de fixation à un support, en particulier un support monté sur un véhicule automobile, non-représenté. Lesdites brides 64 sont situées ici de part et d'autre de la nervure creuse 18 du boîtier 6, à l'une de ses extrémités longitudinale. Elles sont configurées pour permettre, en utilisation, un réglage de l'inclinaison du faisceau émis par le projecteur 2 par rapport à l'horizontale.

Ledit projecteur 2 pourra en particulier être utilisé comme antibrouillard, bien que cette application ne doive nullement être considérée comme limitative.

## Revendications

1. Dispositif (1) d'émission de lumière pour projecteur de véhicule automobile, ledit dispositif comprenant un boitier (6), une source lumineuse (4) disposée sur ledit boitier (6) et un dispositif optique dirigeant un ou des faisceaux lumineux émis par ladite source lumineuse (4), ledit boitier (6) comprenant un élément configuré en saillie pour autoriser un positionnement fixe dudit dispositif optique par rapport au boîtier (6) **caractérisé en ce que** ledit élément configuré en saillie comprend au moins une nervure creuse (18) formée à l'intérieur d'un logement (8) défini par ledit boitier (6) et ledit dispositif optique comprend, en vis-à-vis du boitier (6), une rainure (32) s'emboitant au moins partiellement dans ladite nervure creuse (18) dudit boîtier (6).

2. Dispositif (1) d'émission de lumière selon la revendication 1 dans lequel la nervure creuse (18) du boîtier (6) est rectiligne et/ou comprend plusieurs branches.

3. Dispositif (1) d'émission de lumière selon l'une quelconque des revendications précédentes, dans lequel ladite rainure (32) forme une nervure creuse sur une face du dispositif optique opposée au boitier (6).

4. Dispositif (1) d'émission de lumière selon l'une quelconque des revendications précédentes, dans lequel ladite source lumineuse (4) émet un ou des faisceaux lumineux centrés sur un axe transversal à un axe optique (12) dudit dispositif (1).

5. Dispositif (1) d'émission de lumière selon l'une quelconque des revendications précédentes, dans lequel ladite source lumineuse (4) comprend une ou des diodes électroluminescentes (14), la ou lesdites diodes électroluminescentes (14) étant disposées au niveau de ladite nervure creuse (18) du boitier (6).

6. Dispositif (1) d'émission de lumière selon la revendication 5, dans lequel ladite nervure creuse (32) du dispositif optique comprend une ou des ouvertures (34) pour laisser passer la lumière émise par la ou lesdites diodes (14).

7. Dispositif (1) d'émission de lumière selon l'une quelconque des revendications 5 ou 6, dans lequel ledit dispositif optique est un réflecteur (10) présentant au moins un foyer.

8. Dispositif selon la revendication 7 dans lequel ledit réflecteur (10) est positionné sur ladite nervure creuse (18) du boitier (6) de façon à ce que la ou lesdites diodes électroluminescentes (14) soient situées au niveau du ou desdits foyers.

9. Dispositif (1) d'émission de lumière selon l'une quelconque des revendications 7 ou 8, dans lequel ledit réflecteur (10) comprend plusieurs cavités de réflexions, chaque cavité coopérant chacune avec une source lumineuse (4) distincte, la nervure creuse (32) dudit réflecteur (10) séparant les différentes cavités,

10. Dispositif (1) d'émission de lumière selon la revendication 9 dans lequel le réflecteur (10) et la ou les nervure creuses (32) du réflecteur (10) séparant lesdites cavités sont venus de matière en une seule pièce.

11. Dispositif (1) d'émission de lumière selon l'une quelconque des revendications précédentes ; dans lequel le boîtier (6) définit un logement (8) pour ladite source lumineuse (4), ladite source lumineuse (4) étant en contact thermique avec ledit boîtier (6), ledit boîtier (6) étant configuré pour permettre une dissipation thermique de la chaleur dégagée par ladite source lumineuse (4).

12. Dispositif (1) d'émission de lumière selon l'une quelconque des revendications précédentes, dans lequel le boîtier (6) comprend des brides de fixation (64) à un support.

13. Projecteur (2) de véhicule automobile comprenant le dispositif (1) d'émission de lumière selon l'une quelconque des revendications précédentes.
